# EUROPÄISCHE PATENTSCHRIFT

(11) **EP 3 132 243 B1**
(45) Veröffentlichungstag und Bekanntmachung des Hinweises auf die Patenterteilung: **31.10.2018**
(21) Anmeldenummer: 15724926.9
(22) Anmeldetag: 15.04.2015
(51) Int. Cl.: G01M 17/04, G01M 13/02

(54) **VERFAHREN ZUR NACHBILDUNG DES FAHRZEUGVERHALTENS UND FAHRZEUGPRÜFSTAND**
METHOD FOR SIMULATING THE BEHAVIOUR OF THE VEHICLE AND CHASSIS DYNAMOMETER
PROCÉDÉ DE SIMULATION DU COMPORTEMENT D'UN VÉHICULE ET BANC D'ESSAI DE VÉHICULE

(30) Priorität: 16.04.2014 AT 502872014
(43) Veröffentlichungstag der Anmeldung: 22.02.2017
(73) Patentinhaber: Kristl, Seibt & Co. Gesellschaft m.b.H., 8052 Graz (AT)
(72) Erfinder: REITER, René, A-8630 St. Sebastian (AT); SCHWÄRZLER, Christoph, A-6951 Lingenau (AT); PALZER, Michael, A-8042 Graz-St. Peter (AT); MARGELIK, Roland, A-8151 Rohrbach-Steinberg (AT)
(74) Vertreter: Sonn & Partner Patentanwälte
(86) Internationale Anmeldenummer: PCT/AT2015/050095
(87) Internationale Veröffentlichungsnummer: WO 2015/157788

(56) Entgegenhaltungen:
- EP-A2- 2 161 560
- WO-A1-2013/187453
- DE-A1-102004 021 645

## Beschreibung

Die Erfindung betrifft ein Verfahren zur Nachbildung des Fahrverhaltens eines Fahrzeugs in einem Fahrzeugprüfstand mit einem Aktuator zur Übertragung einer Längskraft auf das Fahrzeug und zur Beschleunigung des Fahrzeugs in eine Längsrichtung, sodass das Fahrzeug einen Translationsweg zurücklegt, wobei der Aktuator in Abhängigkeit von einer auf Basis einer Messung ermittelten Längsbeschleunigung angesteuert wird, sowie einen entsprechenden Fahrzeugprüfstand zur Nachbildung des Fahrverhaltens eines Fahrzeugs mit einer Messvorrichtung zur Messung einer Bewegung des Fahrzeugs, mit einer Steuervorrichtung, welche mit der Messvorrichtung verbunden und eingerichtet ist, aus einer von der Messvorrichtung erhaltenen gemessenen Bewegung eine entsprechende Längsbeschleunigung zu ermitteln, und mit einem Aktuator zur Übertragung einer Längskraft auf das Fahrzeug und zur Beschleunigung des Fahrzeugs in eine Längsrichtung, sodass das Fahrzeug einen Translationsweg zurücklegt, wobei der Aktuator mit der Steuervorrichtung verbunden ist, wobei die Steuervorrichtung eingerichtet ist, in Abhängigkeit von der ermittelten Längsbeschleunigung ein Ansteuersignal an den Aktuator zu übermitteln.

Insbesondere betrifft die vorliegende Erfindung ein Verfahren bei dem ein Hauptantriebsstrang eines zu prüfenden Fahrzeugs mit zumindest einer Belastungsmaschine verbunden ist. Wenn der Hauptantriebsstrang mehrere Achsgetriebe antreibt, können jeweils über Seitenwellen verbundene Belastungsmaschinen zur Nachbildung von Fahrwiderständen bzw. Beschleunigungs- oder Verzögerungsmomenten unabhängig voneinander bremsen und antreiben. Die Regelung der Belastungsmaschine(n) basiert üblicherweise auf einer Simulationsrechnung des Fahrzeugs, gegebenenfalls bis hin zu den einzelnen Reifen. Die Messung der Drehbewegung bezeichnet insbesondere eine in diesem Zusammenhang vorgenommene Messung des Drehmoments und/oder der Drehzahl. Beispiele für Verfahren bzw. entsprechende Prüfstände, deren Verbesserung die Erfindung anstrebt, wurden bereits in der AT 508 031 B1 oder in Bauer R., "New Methodology for Dynamic Drive Train Testing" in Proceedings of the Symposium on International Automotive Technology, S. 1-6, 2011, beschrieben, auf welche insbesondere hinsichtlich der Regelung der Belastungsmaschinen im Rahmen eines Verfahrens bzw. eines Fahrzeugprüfstands der vorliegenden Art verwiesen wird.

Ein weiterer Prüfstand für Fahrzeugantriebsstränge ist in EP 2 161 560 A2 beschrieben. Dieser Prüfstand dient der Nachbildung des Verhaltens eines Antriebsstranges. Dabei ist der Antriebsstrang mit elektrischen Maschinen gekoppelt, wobei der Antriebsstrang bezüglich Translationsbewegungen im Prüfstand, insbesondere gegenüber den Maschinen, fixiert ist.

Die Technologie von derartigen Antriebsstrang-Prüfständen hat sich in den letzten Jahren so weiterentwickelt, dass an einem sogenannten Gesamtfahrzeug-Prüfstand der Prüfling die exakt gleichen Belastungen wie auf der Straße erfährt. Dadurch wird die "Fahrzeugapplikation am Prüfstand" ermöglicht, bei der anstelle von zeit- und kostenintensiven Fahrversuchen auf einer Teststrecke dieselben Versuche am Prüfstand durchgeführt werden können (s. Pillas J., Kirschbaum F., Jakobi R., Gebhardt A., Uphaus F.: "Model-based load change reaction optimization using vehicle drivetrain test beds", Tagungsband des 14. Internationalen Stuttgarter Symposiums, S. 857-867, 2014).

Von den Fahrzeugapplikateuren wird dabei bemängelt, dass die Beschleunigungen des Fahrzeugs als Reaktion auf Prüflingsaktionen (Gas geben, bremsen, schalten, usw.) am Prüfstand naturgemäß anders ausfallen als bei realen Straßenfahrten. Insbesondere das subjektive Empfinden ("Popometer") der Fahrzeugapplikateure ist daher am Prüfstand anders als bei realen Straßenfahrten.

Das Fahrzeug am Prüfstand kann naturgemäß nicht die gleichen Bewegungen wie auf der Straße ausführen. Zusätzlich muss das Fahrzeug eine gute mechanische Verbindung zu den Belastungsmaschinen (bzw. Radmaschinen) aufweisen. Wollte man die Beschleunigung durch Neigung ähnlich wie bei einem Flugsimulator nachbilden, müsste man daher das gesamte Nutenfeld mit Fahrzeug und Belastungsmaschinen bewegen, was aufgrund der großen Masse nicht möglich ist.

In einem anderen Zusammenhang, nämlich bei Prüfständen zur Untersuchung der Auswirkung von Kräften und Drehmomenten, die über Räder und Radaufhängungen auf ein Fahrgestell wirken, wurde bereits in EP 2 602 602 A1 vorgeschlagen, translatorische Aktuatoren vorzusehen und die Antriebsaggregate über Doppel-Gelenkwellen mit den Rädern des Prüflings zu verbinden. Mit den Aktuatoren wird dabei eine Prüflast, z.B. in Form einer Längskraft, auf die Räder ausgeübt. Bei dieser Art von Prüfstand werden mit den translatorischen Aktuatoren jedoch ausschließlich vorbestimmte Werte für Weg oder Kraft nachgefahren. Es ist allenfalls eine - nicht näher spezifizierte - Koordinierung der vorbestimmten Werte für die Prüflast und ein Antriebsmoment bzw. eine Antriebsdrehzahl vorgesehen.

Bei anderen bekannten Prüfständen dieser Art mit translatorischen Aktuatoren, z.B. gemäß DE 102 12 255 A1,
DE 10 2012 101 613 A1 oder EP 0 094 570 B1, spielt eine Drehung der Räder bzw. Seitenwellen des Antriebsstrangs praktisch überhaupt keine Rolle.

In der WO 2013/059547 A1 ist ein Verfahren zur Ermittlung der auf ein Fahrzeug wirkenden aerodynamischen Kräfte gezeigt. Dabei wird in einer ersten Phase das Fahrzeug im Windkanal bewegt und die dabei ausgeführte Bewegung gemessen und aufgezeichnet. Anschließend wird in einer zweiten Phase die aufgezeichnete Bewegung mit Aktuatoren nachgebildet und die dabei, d.h. zur Ausführung dieser Bewegung, aufgebrachte Kraft gemessen.

Eine Beschleunigung des Fahrzeugs als Reaktion auf Prüflingsaktionen am Prüfstand, welche dem Fahrzeugverhalten bei realen Straßenfahrten vergleichbar ist, ist bei den bekannten Verfahren und Prüfständen nicht vorgesehen.

Demnach ist es Aufgabe der Erfindung, ein Verfahren der eingangs angeführten Art zu schaffen, welches ein realitätsnahes, d.h. einem Fahrversuch auf einer Teststrecke angenähertes, subjektives Empfinden einer im Fahrzeug befindlichen Person ermöglicht. Vorzugsweise soll das Verhalten des Fahrzeugs beim Gas geben, bremsen, schalten usw. für den jeweiligen Prüfling realitätsnahe nachgebildet werden.

Zur Lösung dieser Aufgabe ist erfindungsgemäß vorgesehen, dass bei dem Verfahren der eingangs angeführten Art eine von einem Rad oder einem Antriebsstrang des Fahrzeugs ausgeführte Drehbewegung gemessen wird und die Längsbeschleunigung entsprechend der gemessenen Drehbewegung ermittelt wird, wobei die Verarbeitung beginnend mit der Messung der Drehbewegung bis zur Ansteuerung des Aktuators in Echtzeit erfolgt. Dementsprechend ist bei einem Fahrzeugprüfstand der eingangs angeführten Art erfindungsgemäß vorgesehen, dass die Messvorrichtung zur Messung einer Drehbewegung eines Rades oder eines Antriebsstrangs des Fahrzeugs und die Steuervorrichtung zur Ermittlung einer entsprechende Längsbeschleunigung aus der von der Messvorrichtung erhaltenen gemessenen Drehbewegung eingerichtet sind, wobei die Messvorrichtung und die Steuervorrichtung zur Messung der Drehbewegung und zur entsprechenden Ansteuerung des Aktuators in Echtzeit eingerichtet sind. Die Ansteuerung des Aktuators, welcher beispielsweise durch einen Linearmotor gebildet ist, erfolgt nicht auf Basis einer beliebigen vorgegebenen Prüflast oder auch einer rein rechnerisch simulierten Beschleunigung, sondern dynamisch ausgehend von einer Messung der Drehbewegung eines Rades oder eines Antriebsstrangs des Fahrzeugs, d.h. insbesondere ausgehend von einer direkten oder indirekten Messung des vom Rad ausgeübten Drehmoments, und vorzugsweise in Echtzeit ("online"). So kann vorteilhaft eine realistische Reaktion des Prüflings auf die vom Fahrzeug ausgeführte Fahrzeugsteuerung (Gas geben, bremsen, schalten usw.) nachgebildet werden. Erst durch die richtige - d.h. dem realen Prüfling entsprechende - Reaktion des Prüfstands auf die physikalisch am Rad bzw. am Antriebsstrang erzielte Wirkung ist eine "Fahrzeugapplikation am Prüfstand" überhaupt sinnvoll und möglich, weil erst dann Veränderungen etwa im Motorsteuergerät Auswirkungen auf die vom Fahrzeugmodell online berechnete und vom Aktuator in den Prüfling eingebrachte Beschleunigung und somit auf das subjektive Empfinden des Fahrzeugapplikateurs haben. Wenn hingegen - wie im Stand der Technik - vorbestimmte Werte für Weg oder Kraft verwendet werden, ist zwar grundsätzlich ein subjektives Empfinden möglich, dieses entspricht aber im Allgemeinen nicht dem eigentlichen bzw. realen Verhalten des Fahrzeugs, so dass eine Fahrzeugapplikation kaum sinnvoll ist.

Die exakte Längsbeschleunigung, welche das Fahrzeug auf der Straße ausführen würde, kann am Prüfstand nur sehr begrenzt verwendet werden, da sich beispielsweise in einem Vollgas-Szenario bereits nach wenigen Sekunden ein zurückgelegter Weg von über 100 m ergeben würde. Wie sich herausgestellt hat, kann bei längeren Prüfungen für die Ansteuerung des Aktuators die ermittelte Längsbeschleunigung zur Verkürzung eines ausgeführten Translationswegs gegenüber einem aus der ermittelten Längsbeschleunigung resultierenden Weg in eine gefilterte Beschleunigung, die einer subjektiven Beschleunigung entspricht, umgewandelt bzw. umgerechnet werden. Die Umwandlung in eine gefilterte Beschleunigung macht sich die Tatsache zunutze, dass die von einer Person wahrgenommene Beschleunigung im Allgemeinen von der physikalischen Beschleunigung abweicht. Es wird daher vorzugsweise eine Umwandlung zur Annäherung eines subjektiv richtigen Beschleunigungseindrucks und unter Minimierung des vom Prüfling zurückgelegten Weges gewählt.

Es hat sich beispielsweise als günstig herausgestellt, wenn bei der Umwandlung der Beschleunigung niederfrequente Anteile der ermittelten Längsbeschleunigung reduziert werden. Dieses Vorgehen beruht auf der Erkenntnis, dass für die subjektive menschliche Wahrnehmung nur oder vor allem hochfrequente Anteile der Beschleunigung relevant sind. D.h. es werden in erster Linie relativ abrupte Änderungen der Beschleunigung wahrgenommenen, während eine gleichbleibende Beschleunigung oder langsame Änderungen - wenn überhaupt - deutlich weniger wahrgenommen werden. Als niederfrequente Anteile sind in diesem Zusammenhang insbesondere Anteile im Bereich von 1-2 Hz und darunter anzusehen.

Des Weiteren ist es vorteilhaft, wenn die ermittelte Längsbeschleunigung zur Umwandlung in die gefilterte Beschleunigung durch einen Hochpassfilter, beispielsweise einen nach Bessel oder Butterworth entworfenen Hochpassfilter oder vorzugsweise einen Hochpassfilter erster Ordnung modifiziert wird, wobei eine Zeitkonstante des Hochpassfilters vorzugsweise zwischen 0,01 und 1 Sekunde, insbesondere etwa 0,1 Sekunden beträgt. Eine solche Filterung der Längsbeschleunigung ist relativ effizient implementierbar und ermöglicht eine Reaktion in Echtzeit und eine Vermeidung von merklichen, die subjektive Wahrnehmung beeinträchtigenden Latenzen. Dementsprechend ist es bei dem vorliegenden Fahrzeugprüfstand von Vorteil, wenn die Steuervorrichtung einen Hochpassfilter für die ermittelte Längsbeschleunigung aufweist, beispielsweise einen nach Bessel oder Butterworth entworfenen Hochpassfilter oder vorzugsweise einen Hochpassfilter erster Ordnung, wobei eine Zeitkonstante des Hochpassfilters vorzugsweise zwischen 0,01 und 1 Sekunde, insbesondere etwa 0,1 Sekunden, beträgt.

Um den vom Fahrzeug tatsächlich im Prüfstand zurückgelegten Weg weiter zu reduzieren ist es günstig, wenn die Auslenkung des Aktuators auf eine konstante Sollposition, insbesondere in der Mitte eines vorgesehenen Verfahrwegs des Aktuators, geregelt wird. Auf diese Weise können mehrere aufeinanderfolgende, jedoch zeitlich unterbrochene bzw. streckenweise konstante Beschleunigungen in dieselbe Richtung bzw. mit demselben Vorzeichen innerhalb eines insgesamt kürzeren Translationswegs, insbesondere innerhalb derselben Translationsstrecke nachgebildet werden. Die Translationsstrecke wird dabei entsprechend der Beschleunigung mehrfach rasch jeweils in dieselbe Richtung zurückgelegt, wobei zwischen den Beschleunigungen das Fahrzeug durch die Positionsregelung relativ langsam und somit unmerklich zur Ausgangsposition, gegebenenfalls bis zur konstanten Sollposition, zurück bewegt wird. Die Sollposition kann dabei grundsätzlich so gewählt werden, dass die zu erwartenden Beschleunigungen realisierbar sind. In der Mitte des vorgesehenen Verfahrwegs sind Beschleunigungen in beide Richtung (vorwärts oder rückwärts bzw. Gas geben oder bremsen) gleichermaßen möglich. Falls je nach Richtung unterschiedliche bzw. unterschiedlich rasche Beschleunigungen erwartet werden, kann die Sollposition selbstverständlich diesen Erwartungen entsprechend angepasst werden.

Eine besonders einfache und zuverlässige Regelung kann erzielt werden, wenn die Auslenkung des Aktuators von einem Positionsregler, vorzugsweise mit einer Anstiegszeit zwischen 0,05 und 5 Sekunden, insbesondere mit einer Anstiegszeit von etwa 0,5 Sekunden, geregelt wird. Analog kann bei dem vorgeschlagenen Fahrzeugprüfstand vorgesehen sein, dass die Steuervorrichtung einen Positionsregler zur Regelung der Auslenkung des Aktuators aufweist, vorzugsweise mit einer Anstiegszeit zwischen 0,05 und 5 Sekunden, insbesondere von etwa 0,5 Sekunden. Als Positionsregler kann ein gewöhnlicher PID-Regler oder ein Kaskadenregler, z.B. mit einem als PI-Regler ausgeführten Geschwindigkeitsregler und einem als P-Regler ausgeführten vorgeordneten Auslenkungsregler, verwendet werden.

Im Zusammenspiel mit dem Positionsregelkreis ist es günstig, wenn ein der gefilterten Beschleunigung proportionaler Anteil als Störgröße auf den Positionsregelkreis einwirkt, insbesondere wenn zu einem Stellwert des Positionsregelkreises ein der gefilterten Beschleunigung proportionaler Anteil addiert wird. Vorzugsweise wird zu der z.B. von einem Positionsregler dem Aktuator vorgegebenen Kraft eine bei einer bekannten Fahrzeugmasse und einem gegebenenfalls bei mehreren Aktuatoren dem einzelnen Aktuator zugeordneten Anteil der gefilterten Beschleunigung entsprechende Kraft addiert. Der vom Aktuator ausgeführten gefilterten Beschleunigung ist somit ein Beschleunigungsanteil vom Positionsregelkreis überlagert, d.h. die niederfrequenten Anteile der ermittelten Längsbeschleunigung werden durch die Stellwerte eines Positionsreglers ersetzt. Dabei wird vorzugsweise der Positionsregler nicht so scharf wie möglich eingestellt, damit die einer gefilterten Beschleunigung entsprechende Zusatzkraft ebenfalls vom Aktuator umgesetzt werden kann.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. In den Zeichnungen zeigen dabei im Einzelnen:
Fig. 1 schematisch ein Blockschaltbild einer Steuervorrichtung für einen Aktuator zur Übertragung einer Längskraft auf ein Fahrzeug;
Fig. 2 schematisch ein Blockschaltbild eines Positionsreglers zur Verwendung in einer Steuervorrichtung gemäß Fig. 1;
Fig. 3 ein Diagramm der Zeitverläufe einer ermittelten Längsbeschleunigung, einer entsprechenden gefilterten Beschleunigung und einer im Rahmen der Ansteuerung gemäß Fig. 1 tatsächlichen Beschleunigung am Prüfstand; und
Fig. 4 ein Diagramm der Zeitverläufe der den einzelnen Beschleunigungs-Zeitverläufen gemäß Fig. 3 jeweils entsprechenden zurückgelegten Wege.

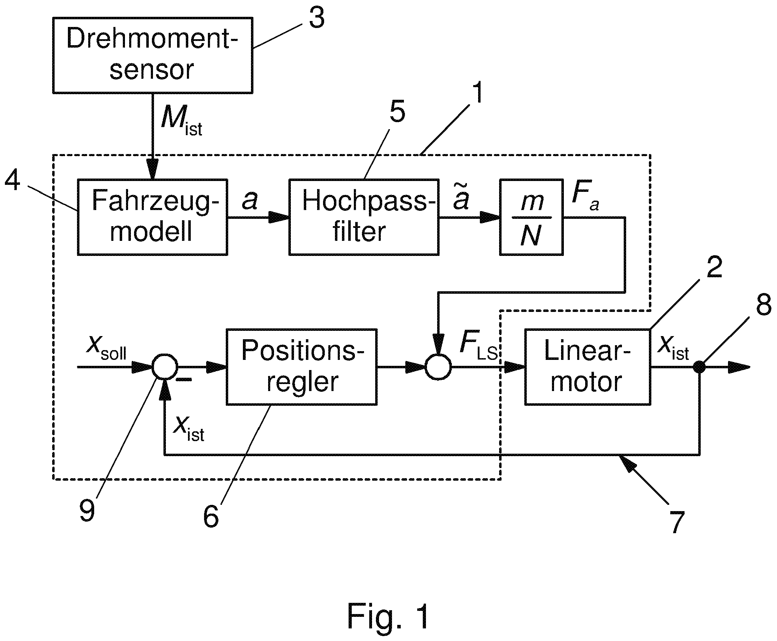

In Fig. 1 ist die Steuervorrichtung 1 für einen Aktuator 2 eines Gesamtfahrzeug-Prüfstands schematisch dargestellt. Der Aktuator ist durch einen Linearmotor zur Übertragung einer Längskraft auf ein mit dem Fahrzeugprüfstand verbundenes Fahrzeug gebildet. Zur Messung einer Drehbewegung eines Antriebsstranges oder eines Rades des Fahrzeugs ist die Steuervorrichtung 1 mit einer Messvorrichtung 3 in Form eines Drehmomentsensor verbunden. Die Steuervorrichtung 1 ist eingerichtet, zunächst eine dem gemessenen Drehmomentwert Mᵢₛₜ gemäß einem Fahrzeugmodell 4 entsprechende Längsbeschleunigung a des Fahrzeugs zu ermitteln. Die so ermittelte Längsbeschleunigung a wird anschließend in einem HochpassFilter 5 modifiziert, wobei niederfrequente Anteile der Beschleunigung a unterdrückt werden, so dass die gefilterte Beschleunigung ã einer subjektiven Beschleunigung entspricht. Die subjektive Beschleunigung ã wird passend gewichtet, d.h. mit einer Fahrzeugmasse m multipliziert und durch eine Anzahl N von (im Wesentlichen parallel ausgerichteten) Linearmotoren am Prüfstand dividiert. Die resultierende subjektive Beschleunigungskraft Fₐ wird am Ausgang eines Positionsreglers 6 quasi als Störgröße zu dessen Stellwert zur Bildung der gewünschten Luftspalt-Kraft F_{LS} des Aktuators 2 addiert. Der Positionsregler 6 ist zum praktisch unmerklichen Rückstellen des Fahrzeugs eingerichtet und arbeitet daher nur mit langsamen bzw. niederfrequenten Beschleunigungen. Effektiv werden somit die vom Hochpassfilter 5 gedämpften oder entfernten niederfrequenten Anteile der ermittelten Längsbeschleunigung a durch den Stellwert des Positionsreglers 6 ersetzt. Die gesamte Verarbeitung beginnend mit der Messung des Drehmoments erfolgt dabei in Echtzeit, d.h. ohne merkliche Verzögerungen. Der Positionsregler 6 ist Teil eines Positionsregelkreises 7 mit einer Positionsmessung 8 des Aktuators 2, welche die aktuelle Position xᵢₛₜ des Läufers des Aktuators 2 ermittelt, und mit einem Differenzglied 9, welches die aktuelle Position xᵢₛₜ mit einer konstanten, vorgegebenen Sollposition xₛₒₗₗ vergleicht und die Differenz, welche einer Auslenkung des Läufers aus der Sollposition xₛₒₗₗ entspricht, an den Positionsregler 6 übermittelt. Der Positionsregler 6 ermittelt aus der erhaltenen Auslenkung einen Stellwert für die Luftspalt-Kraft F_{LS} des Aktuators 2.

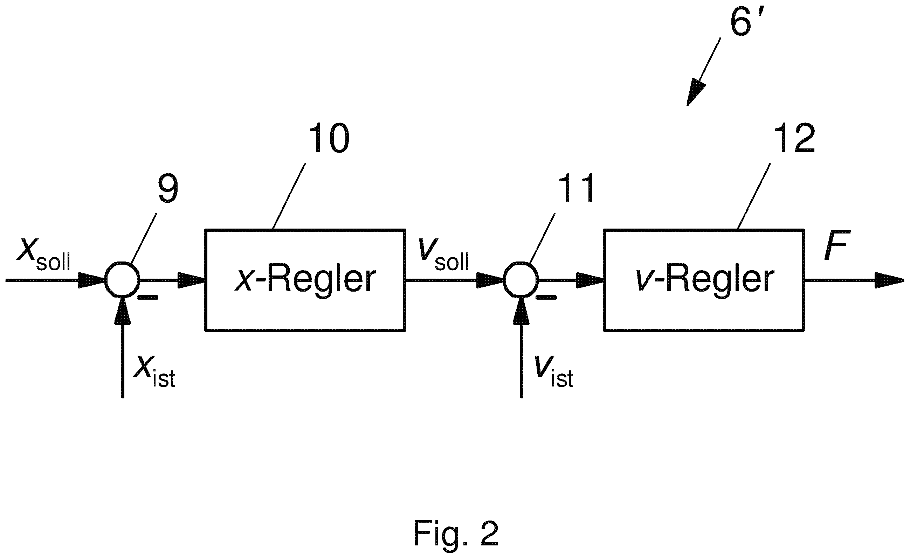

Der in Fig. 2 schematisch dargestellte Positionsregler 6' ist ein Kaskadenregler, welcher den Stellwert F für die Luftspalt-Kraft F_{LS} des Aktuators 2 ausgehend von einer Auslenkung und einer aktuellen Bewegungsgeschwindigkeit vᵢₛₜ des Läufers des Aktuators 2 ermittelt. Dabei wird anhand der vom Differenzglied 9 übermittelten Auslenkung in einem Auslenkungsregler 10 eine Sollgeschwindigkeit vₛₒₗₗ des Läufers ermittelt. Der Auslenkungsregler 10 ist dabei ein P-Regler, dessen Verstärkung so eingestellt ist, dass der Aktuator 2 nur teilweise belastet wird. Die resultierende Sollgeschwindigkeit vₛₒₗₗ wird anschließen in einem weiteren Differenzglied 11 mit einer gemessenen aktuellen Geschwindigkeit vᵢₛₜ des Läufers verglichen und die Differenzgeschwindigkeit an den separaten Geschwindigkeitsregler 12 übermittelt. Der Geschwindigkeitsregler 12 ist dabei ein PI-Regler, dessen Nachstellzeit so gewählt ist, dass die durch den Positionsregler 6' als Stellwert F vorgegebenen Kräfte von im Fahrzeug befindlichen Personen nicht oder kaum wahrgenommen werden, d.h. der Positionsregler 6' bewirkt nur niederfrequente Anteile einer Beschleunigung des Fahrzeugs.

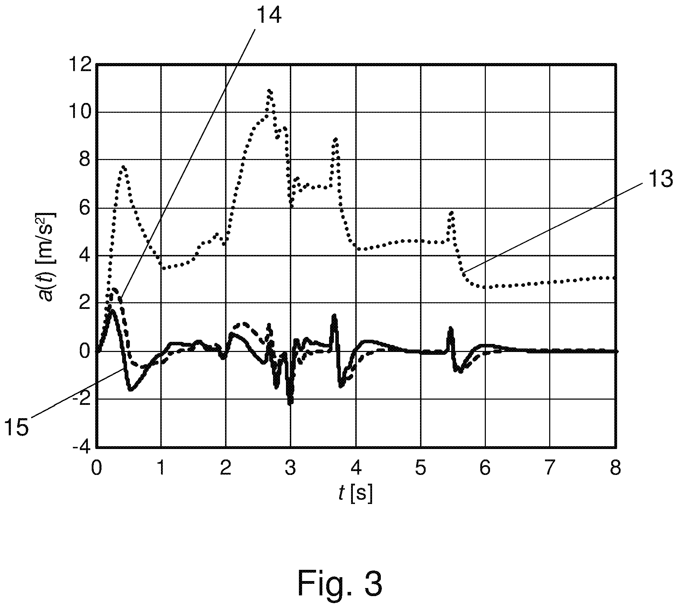

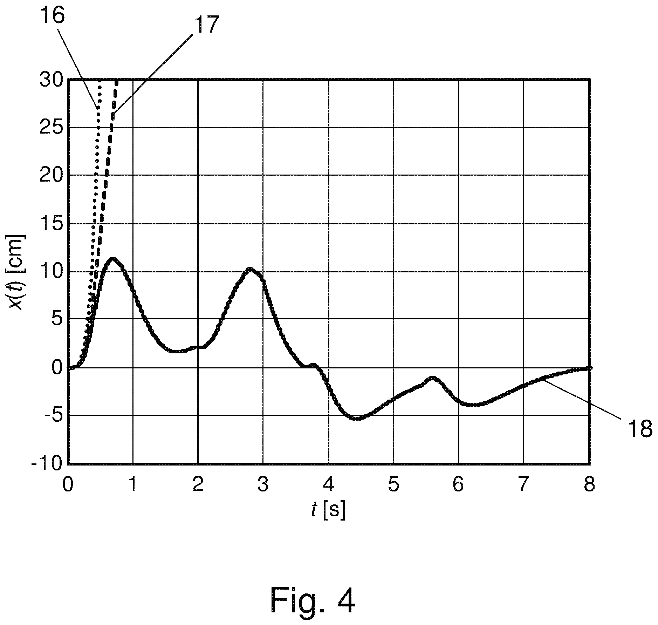

In Fig. 3 ist beispielhaft ein Vollgas-Szenario aus dem Stillstand dargestellt, wobei der gepunktet dargestellte Verlauf 13 die ermittelte Längsbeschleunigung a, der gestrichelt dargestellte Verlauf 14 die subjektive Beschleunigung ã und der durchgezogen dargestellte Verlauf 15 die tatsächlich vom Fahrzeug im Prüfstand erfahrene Beschleunigung jeweils als Funktion der Zeit t in einem Zeitfenster von acht Sekunden repräsentiert. Wie anhand des Verlaufs 13 ersichtlich, ist die ermittelte Längsbeschleunigung a im gesamten Zeitfenster positiv, mit einem Maximalwert bei etwa 2,6 Sekunden von etwa 11 m/s², d.h. das Fahrzeug bzw. der Fahrzeugantrieb beschleunigt - wie bei einem Vollgas-Szenario zu erwarten war - während der acht Sekunden ohne Unterbrechung in dieselbe Richtung. Eine doppelte Integration der dargestellten Verläufe 13, 14, 15 über das gezeigte Zeitfenster unter der Annahme, dass das Fahrzeug zu Beginn des Zeitfensters still steht, ergibt die in Fig. 4 gezeigten Verläufe 16, 17, 18 für den zurückgelegten Weg x(t) als Funktion der Zeit t, wobei für die Verläufe 16, 17, 18 jeweils die gleiche Linienstruktur wie für den zugrunde liegenden Verlauf 13, 14, 15 der Beschleunigung in Fig. 3 verwendet wurde. Der gepunktete Verlauf 16 entspricht dem zurückgelegten Weg, wenn die ermittelte Längsbeschleunigung a unverändert ausgeführt würde, z.B. auf die Straße übertragen würde, und der gestrichelte Verlauf 17 entspricht dem zurückgelegten Weg, wenn die subjektive Beschleunigung ã ausgeführt würde. Im ersten Fall, bei der unveränderten ermittelten Längsbeschleunigung, hätte das Fahrzeug am Ende des Zeitfensters, d.h. nach acht Sekunden, einen Weg von etwa 170 m zurückgelegt. Es liegt auf der Hand, dass eine solche Distanz nicht im Prüfstand zurückgelegt werden kann. Im zweiten Fall, bei Ausführung der subjektiven Beschleunigung, wäre der nach acht Sekunden zurückgelegte Weg bereits auf 4 m reduziert. Für kürzere Testspannen, z.B. im Bereich einer Sekunde oder darunter, wäre der zurückgelegte Weg am Prüfstand bereits grundsätzlich machbar. Der durchgezogene Verlauf 18 entspricht dem zurückgelegten Weg, wenn die subjektive Beschleunigung ã einer vergleichsweise niederfrequenten Positionsregelung überlagert wird, beispielsweise mit einer Steuerung gemäß Fig. 1. Wie sich herausstellt, kann der tatsächlich zurückgelegte Weg am Prüfstand in diesem Fall so weit reduziert werden, dass die maximale Auslenkung aus einer Sollposition bei etwa 12 cm liegt (nach ca. 0,7 Sekunden). Auslenkungen in diesem Bereich sind besonders praxistauglich und ermöglichen beispielsweise die Wellenverbindungen zwischen dem Prüfling und den Belastungsmaschinen des Prüfstands mit Gleichlauf-Gelenkwellen zu realisieren.

## Patentansprüche

1. Verfahren zur Nachbildung des Fahrverhaltens eines Fahrzeugs in einem Fahrzeugprüfstand, welcher einen Aktuator (2) zur Übertragung einer Längskraft auf das Fahrzeug und zur Beschleunigung des Fahrzeugs in eine Längsrichtung, sodass das Fahrzeug einen Translationsweg zurücklegt, umfasst, wobei der Aktuator (2) in Abhängigkeit von einer auf Basis einer Messung ermittelten Längsbeschleunigung (a) angesteuert wird, **dadurch gekennzeichnet, dass** eine von einem Rad oder einem Antriebsstrang des Fahrzeugs ausgeführte Drehbewegung gemessen wird und die Längsbeschleunigung (a) entsprechend der gemessenen Drehbewegung (Mᵢₛₜ) ermittelt wird, wobei die Verarbeitung beginnend mit der Messung der Drehbewegung bis zur Ansteuerung des Aktuators in Echtzeit erfolgt.

2. Verfahren nach Anspruch 1, **dadurch gekennzeichnet, dass** für die Ansteuerung des Aktuators (2) die ermittelte Längsbeschleunigung (a) zur Verkürzung eines ausgeführten Translationswegs gegenüber einem aus der ermittelten Längsbeschleunigung (a) resultierenden Weg in eine gefilterte Beschleunigung (ã), die einer subjektiven Beschleunigung entspricht, umgewandelt wird.

3. Verfahren nach Anspruch 2, **dadurch gekennzeichnet, dass** bei der Umwandlung der Beschleunigung niederfrequente Anteile der ermittelten Längsbeschleunigung (a) reduziert werden.

4. Verfahren nach Anspruch 2 oder 3, **dadurch gekennzeichnet, dass** die ermittelte Längsbeschleunigung (a) zur Umwandlung in die gefilterte Beschleunigung (ã) durch einen Hochpassfilter (5), beispielsweise einen nach Bessel oder Butterworth entworfenen Hochpassfilter oder vorzugsweise einen Hochpassfilter erster Ordnung modifiziert wird, wobei eine Zeitkonstante des Hochpassfilters (5) vorzugsweise zwischen 0,01 und 1 Sekunde, insbesondere etwa 0,1 Sekunden beträgt.

5. Verfahren nach einem der Ansprüche 1 bis 4, **dadurch gekennzeichnet, dass** die Auslenkung des Aktuators (2) auf eine konstante Sollposition (xₛₒₗₗ), insbesondere in der Mitte eines vorgesehenen Verfahrwegs des Aktuators (2), geregelt wird.

6. Verfahren nach Anspruch 5, **dadurch gekennzeichnet, dass** die Auslenkung des Aktuators (2) von einem Positionsregler (6), insbesondere mit einer Anstiegszeit von etwa 0,5 Sekunden, geregelt wird.

7. Verfahren nach Anspruch 2 und 6, **dadurch gekennzeichnet, dass** ein der gefilterten Beschleunigung (ã) proportionaler Anteil als Störgröße auf einen Positionsregelkreis (7) einwirkt, insbesondere zu einem Stellwert des Positionsreglers (6) addiert wird.

8. Fahrzeugprüfstand zur Nachbildung des Fahrverhaltens eines Fahrzeugs mit einer Messvorrichtung (3) zur Messung einer Bewegung des Fahrzeugs, mit einer Steuervorrichtung (1), welche mit der Messvorrichtung (3) verbunden und eingerichtet ist, aus einer von der Messvorrichtung (3) erhaltenen gemessenen Bewegung eine entsprechende Längsbeschleunigung (a) zu ermitteln, und mit einem Aktuator (2) zur Übertragung einer Längskraft auf das Fahrzeug und zur Beschleunigung des Fahrzeugs in eine Längsrichtung, sodass das Fahrzeug einen Translationsweg zurücklegt, wobei der Aktuator (2) mit der Steuervorrichtung (1) verbunden ist, wobei die Steuervorrichtung (1) eingerichtet ist, in Abhängigkeit von der ermittelten Längsbeschleunigung (a) ein Ansteuersignal (F_{LS}) an den Aktuator (2) zu übermitteln, **dadurch gekennzeichnet, dass** die Messvorrichtung (3) zur Messung einer Drehbewegung eines Rades oder eines Antriebsstrangs des Fahrzeugs und die Steuervorrichtung (1) zur Ermittlung einer entsprechende Längsbeschleunigung (a) aus der von der Messvorrichtung (3) erhaltenen gemessenen Drehbewegung (Mᵢₛₜ) eingerichtet sind, wobei die Messvorrichtung und die Steuervorrichtung zur Messung der Drehbewegung und zur entsprechenden Ansteuerung des Aktuators in Echtzeit eingerichtet sind.

9. Fahrzeugprüfstand nach Anspruch 8, **dadurch gekennzeichnet, dass** die Steuervorrichtung (1) einen Hochpassfilter (5) für die ermittelte Längsbeschleunigung (a) aufweist, beispielsweise einen nach Bessel oder Butterworth entworfenen Hochpassfilter oder vorzugsweise einen Hochpassfilter erster Ordnung, wobei eine Zeitkonstante des Hochpassfilters vorzugsweise zwischen 0,01 und 1 Sekunde, insbesondere etwa 0,1 Sekunden, beträgt.

10. Fahrzeugprüfstand nach Anspruch 8 oder 9, **dadurch gekennzeichnet, dass** die Steuervorrichtung (1) einen Positionsregler (6) zur Regelung der Auslenkung des Aktuators (2) aufweist, vorzugsweise mit einer Anstiegszeit zwischen 0,05 und 5 Sekunden, insbesondere von etwa 0,5 Sekunden.

## Claims

1. Method for simulating the handling of a vehicle in a vehicle test stand which comprises an actuator (2) for transmitting a longitudinal force to the vehicle and for accelerating the vehicle in a longitudinal direction such that the vehicle travels a translational path, the actuator (2) being actuated in accordance with a longitudinal acceleration (a) that is determined based on a measurement, **characterised in that** a rotation executed by a wheel or by a drivetrain of the vehicle is measured and the longitudinal acceleration (a) is determined according to the measured rotation (Mᵢₛₜ), the processing taking place in real time from the measurement of the rotation until the actuation of the actuator.

2. Method according to claim 1, **characterised in that**, in order to actuate the actuator (2), the determined longitudinal acceleration (a) is converted into a filtered acceleration (ã) that corresponds to a subjective acceleration so as to shorten an executed translational path with respect to a path resulting from the determined longitudinal acceleration (a).

3. Method according to claim 2, **characterised in that** low-frequency portions of the determined longitudinal acceleration (a) are reduced when the acceleration is converted.

4. Method according to either claim 2 or claim 3, **characterised in that**, in order to be converted into the filtered acceleration (ã), the determined longitudinal acceleration (a) is modified by means of a high-pass filter (5), for example a Bessel or Butterworth high-pass filter, or preferably a first-order high-pass filter, a time constant of the high-pass filter (5) preferably being between 0.01 and 1 second, in particular approximately 0.1 seconds.

5. Method according to any of claims 1 to 4, **characterised in that** the displacement of the actuator (2) is controlled with respect to a constant target position (xₛₒₗₗ), in particular in the middle of a provided travel path of the actuator (2).

6. Method according to claim 5, **characterised in that** the displacement of the actuator (2) is controlled by a position controller (6), in particular having a rise time of approximately 0.5 seconds.

7. Method according to either claim 2 or claim 6, **characterised in that** a portion that is proportional to the filtered acceleration (ã) acts as a disturbance variable on a position control loop (7), and is in particular added to a control variable of the position controller (6).

8. Vehicle test stand for simulating the handling of a vehicle, comprising a measurement device (3) for measuring a movement of the vehicle, a control device (1) that is connected to the measurement device (3) and designed to determine a corresponding longitudinal acceleration (a) from a measured movement received from the measurement device (3), and an actuator (2) for transmitting a longitudinal force to the vehicle and for accelerating the vehicle in a longitudinal direction such that the vehicle travels a translational path, the actuator (2) being connected to the control device (1), and the control device (1) being designed to transmit an actuation signal (F_{LS}) to the actuator (2) in accordance with the determined longitudinal acceleration (a),
**characterised in that**
the measurement device (3) is designed to measure a rotation of a wheel or of a drive train of the vehicle, and the control device (1) is designed to determine a corresponding longitudinal acceleration (a) from the measured rotation (Mᵢₛₜ) received from the measurement device (3), the measurement device and the control device being designed to measure the rotation and to correspondingly actuate the actuator in real time.

9. Vehicle test stand according to claim 8, **characterised in that** the control device (1) comprises a high-pass filter (5) for the determined longitudinal acceleration (a), for example a Bessel or Butterworth high-pass filter, or preferably a first-order high-pass filter, a time constant of the high-pass filter preferably being between 0.01 and 1 second, in particular approximately 0.1 seconds.

10. Vehicle test stand according to either claim 8 or claim 9, **characterised in that** the control device (1) comprises a position controller (6) for controlling the displacement of the actuator (2), preferably having a rise time of between 0.05 and 5 seconds, in particular of approximately 0.5 seconds.

## Revendications

1. Procédé de reproduction du comportement d'un véhicule dans un banc d'essai de véhicule, qui comprend un actionneur (2) pour la transmission d'une force longitudinale au véhicule et pour l'accélération du véhicule dans une direction longitudinale, de façon à ce que le véhicule parcoure une trajectoire en translation, l'actionneur (2) étant contrôlé en fonction d'une accélération longitudinale (a) déterminée sur la base d'une mesure, **caractérisé en ce qu'**un mouvement de rotation effectué par une roue ou une chaîne cinématique du véhicule est mesuré et l'accélération longitudinale (a) est déterminée en fonction du mouvement de rotation (Mᵢₛₜ) mesuré, le traitement ayant lieu à partir de la mesure du mouvement de rotation jusqu'au contrôle de l'actionneur en temps réel.

2. Procédé selon la revendication 1, **caractérisé en ce que**, pour le contrôle de l'actionneur (2), l'accélération longitudinale (a) déterminée est convertie, afin de raccourcir une trajectoire de translation effectuée par rapport à la trajectoire résultant de l'accélération longitudinale (a) déterminée, en une accélération filtrée (ã) qui correspond à une accélération subjective.

3. Procédé selon la revendication 2, **caractérisé en ce que**, lors de la conversion de l'accélération, des parties à basse fréquence de l'accélération longitudinale (a) sont réduites.

4. Procédé selon la revendication 2 ou 3, **caractérisé en ce que** l'accélération longitudinale (a) déterminée est modifiée, pour la conversion en l'accélération filtrée (ã), par un filtre passe-haut (5), par exemple, un filtre passe-haut conçu selon Bessel ou Butterworth ou, de préférence un filtre passe-haut de premier ordre, une constante de temps du filtre passe-haut (5) étant de préférence entre 0,01 et 1 seconde, plus particulièrement d'environ 0,1 seconde.

5. Procédé selon l'une des revendications 1 à 4, **caractérisé en ce qu'**on régule la déviation de l'actionneur (2) vers une position de consigne constante (xₛₒₗₗ), plus particulièrement au centre d'une trajectoire prévue de l'actionneur (2).

6. Procédé selon la revendication 5, **caractérisé en ce que** la déviation de l'actionneur (2) est régulée par un régulateur de position (6), plus particulièrement avec un temps de montée d'environ 0,5 secondes.

7. Procédé selon la revendication 2 et 6, **caractérisé en ce qu'**une partie proportionnelle à l'accélération filtrée (ã) agit comme une grandeur de perturbation sur un circuit de régulation de position (7), plus particulièrement elle est ajoutée à une valeur de réglage du régulateur de position (6).

8. Banc d'essai de véhicule pour la reproduction du comportement d'un véhicule, avec un dispositif de mesure (3) pour la mesure d'un mouvement du véhicule, avec un dispositif de commande (1), qui est relié avec le dispositif de mesure (3) et qui est conçu pour déterminer, à partir d'un mouvement mesuré obtenu par le dispositif de mesure (3), une accélération longitudinale (a) correspondante, et avec un actionneur (2) pour la transmission d'une force longitudinale au véhicule et pour l'accélération du véhicule dans une direction longitudinale, de façon à ce que le véhicule parcoure une trajectoire de translation, l'actionneur (2) étant relié au dispositif de commande (1), le dispositif de commande (1) étant conçu pour transmettre, en fonction de l'accélération longitudinale (a) déterminée, un signal de commande (F_{LS}) à l'actionneur (2), **caractérisé en ce que** le dispositif de mesure (3) est conçu pour la mesure d'un mouvement de rotation d'une roue ou d'une chaîne cinématique du véhicule, et le dispositif de commande (1) est conçu pour la détermination d'une accélération longitudinale (a) correspondante à partir du mouvement de rotation (Mᵢₛₜ) mesuré obtenu par le dispositif de mesure (3), le dispositif de mesure et le dispositif de commande étant conçus pour la mesure du mouvement de rotation et pour la commande correspondante de l'actionneur en temps réel.

9. Banc d'essai de véhicule selon la revendication 8, **caractérisé en ce que** le dispositif de commande (1) comprend un filtre passe-haut (5) pour l'accélération longitudinale (a) déterminée, par exemple, un filtre passe-haut conçu selon Bessel ou Butterworth ou, de préférence un filtre passe-haut de premier ordre, une constante de temps du filtre passe-haut (5) étant de préférence entre 0,01 et 1 seconde, plus particulièrement d'environ 0,1 seconde.

10. Banc d'essai de véhicule selon la revendication 8 ou 9, **caractérisé en ce que** le dispositif de commande (1) comprend un régulateur de position (6) pour la régulation de la déviation de l'actionneur (2), de préférence avec un temps de montée entre 0,05 et 5 secondes, plus particulièrement d'environ 0,5 seconde.
